# FASCICULE DE BREVET EUROPEEN

(11) **EP 3 586 258 B1**
(45) Date de publication et mention de la délivrance du brevet: **11.10.2023**
(21) Numéro de dépôt: 18709706.8
(22) Date de dépôt: 26.02.2018
(51) Int. Cl.: G06F 21/35, H04L 9/08, H04W 12/06

(54) **SYSTÈME D'AUTHENTIFICATION À CLÉ SEGMENTÉE**
SEGMENTIERTES SCHLÜSSELAUTHENTIFIKATIONSSYSTEM
SEGMENTED KEY AUTHENTICATION SYSTEM

(30) Priorité: 27.02.2017 FR 1751535
(43) Date de publication de la demande: 01.01.2020
(73) Titulaire: Gascuel, Jacques, Escaldes-Engordany AD700 (AD)
(72) Inventeur: Gascuel, Jacques, Escaldes-Engordany AD700 (AD)
(74) Mandataire: Gevers & Orès
(86) Numéro de dépôt international: PCT/FR2018/050450
(87) Numéro de publication internationale: WO 2018/154258

(56) Documents cités:
- EP-A2- 1 213 882
- US-A1- 2014 208 112
- US-A1- 2016 286 396
- US-A1- 2016 337 863

## Description

### 1. Domaine technique de l'invention

L'invention concerne un système d'authentification à un ou plusieurs applicatifs. En particulier, l'invention concerne un système d'authentification à un ou plusieurs applicatifs accessibles via un ordinateur et dont l'accès est contrôlé par une donnée d'authentification, qui peut être par exemple une identité numérique, un couple identifiant/mot de passe, une clé de chiffrement, un code d'accès, une clé d'association de deux appareils, etc.

### 2. Arrière-plan technologique

Les systèmes d'authentification actuels se basent généralement sur une authentification faible de type identifiant et/ou mot de passe. Ce type d'authentification est une des plus simple à mettre en place et requiert l'intervention d'un utilisateur qui va entrer ces identifiants qu'il connaît ou qui sont notés sur un autre document.

Ce type d'authentification a plusieurs inconvénients.

Premièrement, elle repose sur la mémoire de l'utilisateur et si celui-ci doit retenir plusieurs identifiants et/ou mots de passe, il est susceptible d'oublier facilement les couples identifiants/mots de passe associés à chaque applicatif. Pour résoudre cet inconvénient, il existe des gestionnaires de mots de passe, dont l'accès est protégé par un mot de passe principal. Toutefois, si une personne récupère le mot de passe principal, elle a accès à l'ensemble des couples identifiants/mot de passe de l'utilisateur ce qui est très dommageable.

Deuxièmement, si une personne malveillante vole le couple identifiant/mot de passe à distance par piratage ou parce qu'il est écrit sur un document, cette personne malveillante peut accéder à l'applicatif sans que l'utilisateur soit au courant de ce vol. Pour résoudre cet inconvénient, il existe des objets ou appareils physiques possédés par l'utilisateur permettant de fournir la donnée d'authentification, par exemple une carte à puce, une clé USB, un dispositif mobile, etc., via par exemple un lecteur de carte. Toutefois, si une personne malveillante récupère cet objet ou appareil, elle peut facilement accéder à l'applicatif à la place de l'utilisateur ou au moins récupérer les données qu'il contient.

Une autre solution était d'opter pour une identification dite forte, dans laquelle un mot de passe est demandé et un code est envoyé par SMS à un téléphone de l'utilisateur pour vérifier son identité. Dans ce cas, l'inconvénient est que si le téléphone est volé, ce SMS est reçu directement par la personne malveillante et simplifie sont authentification auprès de l'applicatif.

Enfin, même si le couple identifiant/mot de passe est suffisamment caché d'une personne malveillante, celui-ci doit être entré en clair dans l'applicatif. Ainsi, il peut être récupéré par une personne malveillante notamment si celle-ci a installé, sur l'ordinateur utilisé par l'utilisateur pour accéder à l'applicatif, un logiciel d'enregistrement de frappes (*keylogger* en anglais).

L'inventeur a donc cherché une solution à ces inconvénients. Les demandes de brevet US2016/337863 A1 et US2014/0208112 A1 divulguent des méthodes de protection de données d'authentification utilisant un partage de clés.

### 3. Objectifs de l'invention

L'invention vise à pallier au moins certains des inconvénients des systèmes d'authentification connus.

En particulier, l'invention vise à fournir, dans au moins un mode de réalisation de l'invention, un système d'authentification qui permet le stockage d'une ou plusieurs données d'authentification en sécurité.

L'invention vise aussi à fournir, dans au moins un mode de réalisation, un système d'authentification utilisant des objets physiques pour l'authentification afin d'éviter un vol de données d'authentification à distance.

L'invention vise aussi à fournir, dans au moins un mode de réalisation de l'invention, un système d'authentification permettant d'éviter les vols de mot de passe par un enregistreur de frappes.

L'invention vise aussi à fournir, dans au moins un mode de réalisation de l'invention, un système d'authentification permettant de se prémunir des risques d'authentification par une personne malveillante en cas de vol d'un ou plusieurs des équipements de ce système d'authentification.

### 4. Exposé de l'invention

Pour ce faire, l'invention concerne un système d'authentification à au moins un applicatif accessible par un utilisateur via un ordinateur et dont l'accès est contrôlé par une donnée d'authentification, comprenant :
- un dispositif mobile principal, comprenant un module de communication en champ proche, une mémoire non volatile et une mémoire volatile, et configuré pour communiquer avec l'ordinateur,
- un jeton principal, comprenant un module de communication en champ proche et une mémoire non volatile dans laquelle est enregistrée au moins une donnée d'authentification,

le dispositif mobile principal étant configuré pour récupérer, via le module de communication en champ proche, la donnée d'authentification du jeton principal grâce à une clé d'appairage, et le jeton principal étant configuré pour permettre l'accès à la donnée d'authentification uniquement sur présentation de ladite clé d'appairage,
caractérisé en ce que la clé d'appairage est segmentée en plusieurs segments, un premier segment étant enregistré sur la mémoire non volatile du dispositif mobile principal et au moins un autre segment supplémentaire étant enregistré sur une mémoire non volatile d'un dispositif mobile secondaire et/ou une mémoire non volatile d'un jeton secondaire, le dispositif mobile principale étant configuré pour récupérer le ou les segments supplémentaires par communication en champ proche avec le ou lesdits dispositifs mobiles secondaires et/ou le ou lesdits jetons secondaires, pour reconstituer la clé d'appairage et pour présenter la clé d'appairage reconstituée au jeton principal, et en ce que le ou les segments supplémentaires récupérés par le dispositif mobile principal sont stockés sur la mémoire volatile du dispositif mobile principal.

Ainsi, le dispositif mobile ne garde pas en permanence la donnée d'authentification afin d'éviter qu'elle soit copiée par une personne malveillante. La mémoire volatile est par exemple une mémoire de type mémoire RAM (pour *Random Access Memory* en anglais).

Un système d'authentification selon l'invention permet donc de stocker des données d'authentification dans un jeton physique dit jeton principal, qui fait ainsi office de gestionnaire d'authentification, mais dont l'accès est tributaire d'une clé d'appairage segmentée dont les segments sont répartis dans plusieurs équipements physiques, qui peuvent être d'autres jetons et/ou dispositifs mobiles. Ces équipements physiques peuvent être dissimulés, ou portés par des personnes différentes. Au lieu d'utiliser la mémoire de l'utilisateur pour retenir un mot de passe, l'utilisateur retient ainsi quels équipements contiennent les segments de la clé d'appairage et garde secret cette information. Ainsi, une personne malveillante voulant accéder à la donnée d'authentification comprise dans le jeton principal ne pourra pas le faire tant qu'elle n'aura pas reconstitué entièrement la clé d'appairage avec tous les segments. Mais ces segments de clés peuvent être dissimulés, par exemple un utilisateur dans un bureau d'une entreprise peut récupérer un segment de clé dans un jeton dissimulé sous son bureau, et/ou dans un jeton dissimulé à l'entrée de son bureau et/ou dans une autre salle de l'entreprise, et/ou demander à un responsable hiérarchique un segment enregistré dans son dispositif mobile qui pourra au passage l'authentifier de visu, etc. Les interactions du dispositif mobile principal avec le jeton principal et l'ensemble des récupérations de segments se font par communication en champ proche, ce qui nécessite une proximité physique et évite les piratages à distance. Il n'y a pas de connexion à un réseau Internet qui augmenterait le risque de piratage à distance. L'ensemble des communications se fait en réseau local, y compris la connexion entre l'ordinateur et le dispositif mobile principal (qui peut être connecté par câble ou sans-fil, par exemple par Wi-Fi ou Bluetooth).

Le dispositif mobile est par exemple un ordiphone (*smartphone* en anglais), une tablette, etc. Le jeton est un objet physique par exemple de type tag (étiquette) NFC (pour *Near Field Communication* en anglais), alimenté uniquement via champ proche ou disposant d'une source d'énergie propre (une pile ou batterie par exemple). L'applicatif peut être une page web, un logiciel, une application, etc. L'ordinateur peut être tout équipement comprenant un processeur comme un ordiphone, un PC fixe/portable, une tablette, un objet intelligent, etc.

Le premier segment détenu par le dispositif mobile principal peut être détenu en permanence par ce dispositif mobile principal, ou bien peut-être reçu au préalable, par exemple envoyé par un serveur externe.

La donnée d'authentification peut être par exemple une identité numérique, un couple identifiant/mot de passe, une clé de chiffrement, un code d'accès, une clé d'association de deux appareils (de type association Wi-Fi ou Bluetooth), etc. La donnée d'authentification peut être associée à un libellé (un nom ou une référence par exemple), permettant de la retrouver dans le jeton principal. Le jeton principal s'apparente à un gestionnaire de mot de passe mais plus complet car il permet davantage de type d'authentification, et à un objet physique tel que décrit dans l'art antérieur mais avec une couche de sécurité supplémentaire. En effet, il ne présente pas les inconvénients décrits précédemment, notamment :
- il n'y a pas de mot de passe principal permettant d'accéder à l'ensemble des données d'authentification si celui-ci est volé. L'ensemble des données est sécurisé par les segments de clé qui offrent une protection bien plus robuste, notamment car non disponible à distance ;
- un vol du jeton principal ne permet pas l'accès aux données d'authentification car l'accès à ces données stockées dans la mémoire est soumis à la présentation de la clé d'appairage. Sans la clé d'appairage, le jeton principal est inutile. En outre, les données qu'il contient sont chiffrées (par exemple chiffrement AES 256) et le jeton peut comprendre des protections internes pour éviter le vol de données, du type effacement de données (notamment suivi d'une réécriture de données aléatoires) ou destruction physique, notamment après un ou plusieurs essais de présentation d'une clé d'appairage. De plus, même si les développements futurs des technologies permettent de casser la clé de chiffrement utilisé pour les données, ces données sont de toute façon inaccessibles sans la clé d'appairage complète. De même, le décryptage d'un segment de clé ne permet pas de retrouver la clé en l'absence des autres segments qui peuvent être dans des objets physiquement cachés ;
- un vol du dispositif mobile ne permet pas non plus d'accéder à l'applicatif, ni de récupérer les données d'authentification du jeton principal, puisqu'il faut être en possession de l'intégralité des segments de clé et donc connaître l'existence, l'identité et l'emplacement du ou des dispositifs mobiles secondaires et/ou du ou des jetons secondaires.

Le dispositif mobile principal peut en outre être appairé au préalable avec le jeton principal, de sorte que la clé d'appairage ne peut être fournie que par ce dispositif mobile principal, auquel cas elle est rejetée. Cet appairage préalable renforce la sécurité dans le cas très peu probable ou une personne malveillante réussissait à reconstituer la clé avec tous les segments.

Le système d'authentification est décrit sous l'angle de l'accès à un unique applicatif, dont la donnée d'authentification est comprise dans un jeton, qui est donc le jeton principal puisqu'il contient cette donnée. Toutefois, le jeton principal pour un applicatif peut être un jeton secondaire pour un autre applicatif, c'est-à-dire qu'il peut comprend un segment de clé d'appairage pour un autre jeton principal d'un autre applicatif. De même, un jeton secondaire pour l'applicatif décrit dans l'invention peut comprend des données d'authentification pour un autre applicatif. De même pour le dispositif mobile principal qui peut comprend un autre segment de clé ou un dispositif secondaire peut communiquer avec un ordinateur pour un autre applicatif.

Selon certaines variantes de l'invention, le jeton principal (ou un jeton secondaire) peut comprendre un microcontrôleur. Le microcontrôleur peut permettre d'améliorer la sécurité du système, notamment en contrôlant certains mécanismes de sécurité en interne, notamment un chiffrement en AES256/SHA256 et/ou RSA2048 et/ou RSA4096. Le microcontrôleur permet une gestion applicative de certaines fonctions qui sont prises en charge par le dispositif mobile principal lorsque le jeton ne comprend pas ce microcontrôleur. En particulier, certains mécanismes de sécurité sont améliorés en permettant la manipulation de la mémoire en interne, le comptage du nombre d'essai d'appairage, la gestion d'authentification, la gestion du temps par une horloge temps réel, la gestion de capteurs, etc.

Selon certaines variantes de l'invention, le jeton principal est configuré de telle sorte qu'il est accessible via deux profils de personnes différentes :
- un profil administrateur, qui peut configurer le jeton principal, notamment le type de brouillage, le nombre d'essais autorisés, les mécanismes de protection, les mots de passe utilisateur, la segmentation de la clé d'appairage, le dispositif mobile principal pouvant être utilisé, les privilèges d'accès aux données par des utilisateurs, etc. En outre, l'administrateur peut consulter l'ensemble des libellés des données d'authentifications présents sur le jeton ;
- au moins un profil utilisateur, devant se soumettre aux contraintes prédéfinies par l'administrateur, et ne pouvant seulement vérifier la présence du libellé de la donnée d'authentification qu'il souhaite récupérer sans pouvoir consulter l'ensemble des libellés.

Les mots de passes de l'administrateur et du ou des utilisateurs sont chiffrés et stockés dans le jeton.

Dans un fonctionnement préférentiel de l'invention, la donnée d'authentification est présente sur la mémoire volatile qu'une fraction de seconde (de l'ordre de la milliseconde), uniquement le temps de transférer cette donnée à l'ordinateur, puis est supprimée (ou libérée pour être remplacée par un autre type de donnée). De préférence encore, l'ordinateur stocke lui-même la donnée d'authentification sur une mémoire volatile.

La donnée d'authentification étant stockée dans une mémoire volatile pendant un temps très court, il est difficile voire impossible de la récupérer pour une personne malveillante. En outre, c'est généralement une donnée de petite taille (quelques octets), de sorte qu'une personne malveillante qui analyserait la mémoire devrait retrouver cette donnée de petite taille parmi plusieurs mégaoctets, gigaoctets ou téraoctets de données.

Avantageusement et selon l'invention, la donnée numérique est un mot de passe, en ce que le jeton principal comprend un module de brouillage adapté pour brouiller ledit mot de passe par un ajout de caractères à des positions particulières du mot de passe, lesdits caractères et lesdites positions étant prédéterminées et connues de l'utilisateur.

Selon cet aspect de l'invention, le brouillage permet de lutter contre les enregistreurs de frappe en ajoutant des caractères à des positions prédéterminées et connues par l'utilisateur par des moyens mnémotechniques. Ces caractères ajoutés sont ensuite supprimés par l'utilisateur dans le champ de texte destiné au mot de passe. Ainsi, lorsque l'utilisateur va copier le mot de passe dans le champ, le mot de passe affiché sera un mot de passe brouillé, qui peut être récupéré par un enregistreur de frappe ou même lu directement sur l'écran par une personne malveillante. Lorsque l'utilisateur supprime les caractères ajoutés à l'aide d'un clavier, un enregistreur de frappe ne détectera qu'un appui sur une touche de suppression, sans savoir à quel emplacement se trouve le curseur et donc sans savoir le caractère qui a été supprimé.

Dans les autres variantes de l'invention, par exemple lorsque la donnée d'authentification n'est pas un mot de passe à entrer, le brouillage n'est pas nécessaire car un enregistreur de frappe ne peut rien détecter et l'authentification est faite automatiquement sur présentation de la donnée d'authentification, sans intervention de l'utilisateur.

Avantageusement et selon l'invention, la clé d'appairage est segmentée en un premier segment et au moins deux segments supplémentaires, et en ce que les segments supplémentaires sont ordonnés, de sorte que la reconstitution de la clé d'appairage n'est possible que si les segments supplémentaires sont récupérés par le dispositif mobile principal dans un ordre prédéterminé.

Selon cet aspect de l'invention, la reconstitution de la clé d'appairage est à la fois soumise à la connaissance de la position et de l'identité des équipements secondaires comprenant les segments supplémentaires, ce qui assure déjà une première sécurité comme expliqué précédemment, mais aussi à l'ordre dans lequel ces segments sont récupérés. Par exemple, l'utilisateur doit d'abord récupérer un segment supplémentaire n°1 d'un jeton secondaire près de l'entrée de son bureau, un segment supplémentaire n°2 d'un jeton secondaire sous son bureau, et un segment supplémentaire n°3 d'un dispositif mobile secondaire porté par son responsable. Si les segments supplémentaire ne sont pas récupérés dans l'ordre (par exemple n°3 puis n°1 puis n°2), la clé reconstituée avec les segments dans le désordre ne forme pas la clé d'appairage et le dispositif mobile principal ne peut pas récupérer la donnée d'authentification. Si les segments sont récupérés dans l'ordre, la clé d'appairage est reconstituée.

Avantageusement et selon l'invention, le jeton principal comprend une pluralité de données d'authentification chacune identifiées par un libellé, et en ce que le dispositif mobile principal requiert une donnée d'authentification en fournissant ledit libellé au jeton principal.

Selon cet aspect de l'invention, un même jeton principal peut contenir des données d'authentification pour plusieurs applicatifs et les libellés permettent de retrouver une donnée d'authentification dans le jeton principal. Les libellés peuvent aussi permettre au dispositif mobile principal de vérifier au préalable que la donnée est bien dans le jeton principal et pas dans un autre jeton.

L'invention concerne également un procédé mis en oeuvre par un système d'authentification selon l'invention, caractérisé en ce qu'il comprend les étapes suivantes
- une étape de requête d'une donnée d'authentification par l'applicatif,
- une étape de transmission de la requête de l'ordinateur vers le dispositif mobile principal,
- une étape de communication en champ proche du dispositif mobile principal avec le jeton principal,
- une étape de vérification de la clé d'appairage reconstituée présentée par le dispositif, et :
   - tant que la clé d'appairage n'est pas complète, une étape de récupération d'au moins un segment de clé d'appairage par le dispositif mobile principal, suivi d'une nouvelle étape de vérification de la clé d'appairage reconstituée,
   - si la clé d'appairage est correcte, une étape de transmission de la donnée d'authentification par le jeton principal au dispositif mobile principal,
- une étape de stockage de la donnée d'authentification par le dispositif mobile principal dans sa mémoire volatile,
- une étape de transmission de la donnée d'authentification par le dispositif mobile principal à l'ordinateur,
- une étape d'authentification à l'applicatif via la donnée d'authentification.

Un procédé selon l'invention permet donc un contrôle total de l'authentification d'un utilisateur souhaitant accéder à un applicatif sur l'ordinateur. La donnée d'authentification, stockée sur le jeton principal, n'est fournie qu'en présence de l'ensemble des segments de la clé d'appairage. Les segments de la clé d'appairage peut être récupérés au préalable par le dispositif mobile principal puis fournis au jeton principal, ou le dispositif mobile principal peut tenter d'accéder au jeton principal, auquel cas le jeton principal refuse l'accès et indique que la clé présentée n'est pas complète.

De préférence, le nombre d'étapes de vérification peut être limité (de une à plusieurs étapes), et si ce nombre est dépassé, le jeton principal engage une étape de protection des données qu'il contient, par exemple par effacement des données et réécriture de celles-ci pour éviter qu'une personne malveillante y accède. Ce nombre d'étapes de vérification est pré-paramétrable dans le jeton principal, et une personne malveillante ne peut pas savoir combien d'étapes de vérification sont autorisées et ne peut donc pas prévoir une attaque multiple en fonction du nombre d'essai possible (il peut n'y en avoir qu'un).

Avantageusement et selon l'invention, dans la variante du système d'authentification dans laquelle le jeton principal comprend un module de brouillage, l'étape d'authentification à l'applicatif comprend une sous-étape de copie du mot de passe brouillé dans un champ de texte de l'applicatif, et une sous-étape de suppression par l'utilisateur des caractères ajoutés par le module de brouillage, de sorte à ce que le mot de passe affiché corresponde au mot de passe de l'applicatif.

Dans une autre variante de l'invention, l'utilisateur peut aussi ajouter des caractères pour reconstituer le mot de passe.

L'invention concerne également un système d'authentification et un procédé d'authentification caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système d'authentification selon un mode de réalisation de l'invention,
- la figure 2 est une vue schématique d'un procédé d'authentification selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

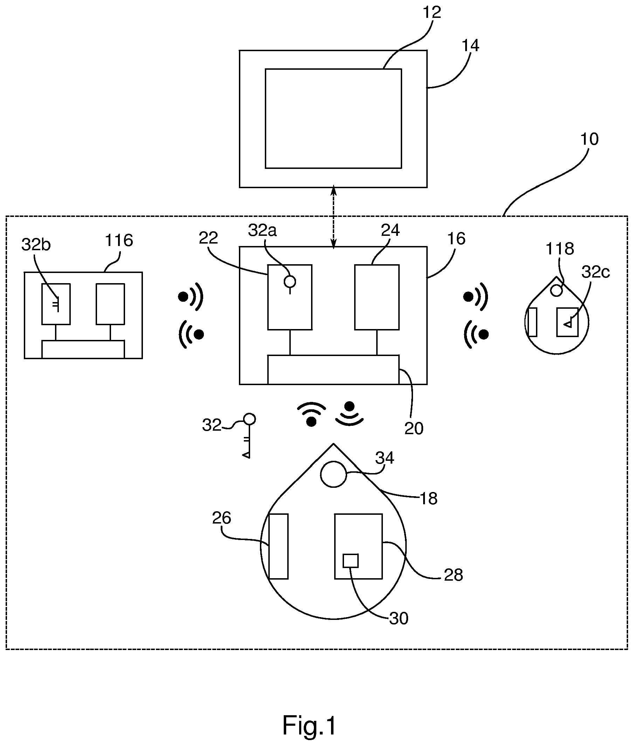

La figure 1 représente schématiquement un système 10 d'authentification selon un mode de réalisation de l'invention. Le système 10 d'authentification permet de contrôler l'accès à un applicatif 12 accessible via un ordinateur 14. Le système d'authentification comprend un dispositif 16 mobile principal et un jeton 18 principal. Le dispositif mobile principal comprend un module 20 de communication en champ proche, un mémoire 22 non-volatile et une mémoire 24 volatile.

Le jeton 18 principal comprend aussi un module 26 de communication en champ proche et une mémoire 28 non volatile, dans laquelle est stockée (de façon chiffrée) au moins une donnée 30 d'authentification. Le jeton principal peut comprendre une attache 34 pour être transporté comme porte-clés.

Pour accéder à l'applicatif, un utilisateur a besoin de cette donnée 30 d'authentification. Pour la récupérer, le dispositif 16 mobile principal doit présenter une clé 32 d'appairage permettant l'accès à la donnée 30 d'authentification, ladite donnée 30 d'authentification n'étant transmise par le jeton 18 principal qu'en présence de cette clé 32 d'appairage. Cette clé d'appairage est de préférence une clé de type clé de chiffrement et est une donnée composée d'une suite de valeurs hexadécimales. La clé 32 d'appairage est toutefois stockée en plusieurs segments, dont un premier segment 32a est stocké dans la mémoire 22 non volatile du dispositif 16 mobile principal. Un ou plusieurs segments supplémentaires, ici deux segments supplémentaires, sont stockés par d'autres équipements : par exemple, un dispositif 116 mobile secondaire, similaire au dispositif 16 mobile principal, possède un segment 32b supplémentaire et un jeton 118 secondaire, similaire au jeton 18 principal, possède un segment 32c supplémentaire. Pour reconstituer la clé 32 d'appairage, le dispositif 16 mobile doit récupérer ces segments supplémentaires grâce à une communication en champ proche. La reconstitution de la clé 32 d'appairage peut nécessiter que les segments soient récupérés dans un ordre précis.

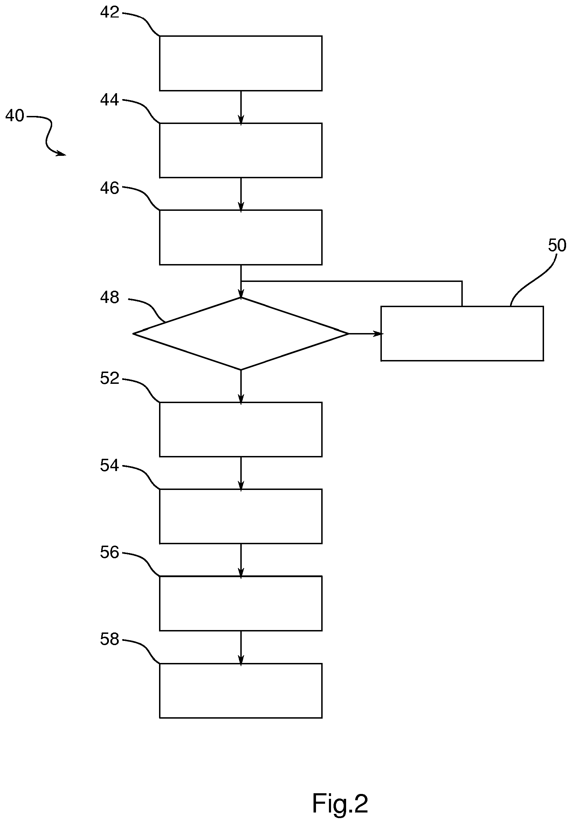

Le procédé 40 d'authentification mis en oeuvre par ce système 10 d'authentification est représenté schématiquement en référence avec la figure 2.

Le procédé 40 d'authentification comprend une étape 42 de requête d'une donnée d'authentification par l'applicatif, une étape 44 de transmission de la requête de l'ordinateur vers le dispositif mobile principal et une étape 46 de communication en champ proche du dispositif mobile principal avec le jeton principal.

Avant de fournir la donnée d'authentification, le jeton principal procède à une étape 48 de vérification de la clé d'appairage reconstituée présentée par le dispositif. Tant que celle-ci n'est pas complète, le dispositif mobile principal procède à au moins une étape 50 de récupération d'au moins un segment de clé d'appairage par le dispositif mobile principal, puis le jeton principal procède à une nouvelle étape de vérification de la clé d'appairage reconstituée.

Le nombre d'étapes 48 de vérification effectuées peut être limité.

Si la clé d'appairage est complète, le jeton principal procède à une étape 52 de transmission de la donnée d'authentification par le jeton principal au dispositif mobile principal.

Le dispositif procède ensuite à une étape 54 de stockage de la donnée d'authentification par le dispositif mobile principal dans sa mémoire volatile.

Le procédé comprend ensuite une étape 56 de transmission de la donnée d'authentification par le dispositif mobile principal à l'ordinateur.

Enfin, le procédé comprend une étape 58 d'authentification à l'applicatif via la donnée d'authentification.

Le jeton principal peut en outre comprend un module de brouillage (non représenté), et l'étape d'authentification comprend alors une sous-étape de copie du mot de passe brouillé dans un champ de texte de l'applicatif, et une sous-étape de suppression par l'utilisateur des caractères ajoutés par le module de brouillage, de sorte à ce que le mot de passe affiché corresponde au mot de passe de l'applicatif. Un exemple de brouillage du mot de passe peut être le suivant :
Le mot de passe pour l'applicatif est motdepasse. Lorsque ce mot de passe est requis par le dispositif mobile principal, suite à présentation de la clé d'appairage complète et valide, ce mot de passe est brouillé par le module de brouillage. Il peut en outre être stocké directement brouillé et chiffré. Le mot de passe brouillé est par exemple &mo@tdep%as^se. L'utilisateur, connaissant le brouillage prédéterminé, notamment la position du brouillage, sait que les caractères ajoutés sont les 1^{e}, 4^{e}, 9^{e} et 12^{e} caractères. Il peut entrer dans le mot de passe brouillé dans l'applicatif, soit en recopiant, soit par copié-collé. Il supprime ensuite les caractères ajoutés en se positionnant avant ou après les caractères ajoutés grâce à une souris ou par appui tactile et les supprime via une touche « suppression » (par exemple « Suppr » ou « Retour arrière ») du clavier pour permettre l'envoi du vrai mot de passe à l'applicatif.

Un enregistreur de frappes qui serait installé sur l'ordinateur exécutant l'applicatif, enregistrerait donc les frappes suivantes : « & » « m » « o » « @ » « t » « d » « e » « p » « % » « a » « s » « ^ » « s » « e » « Touche suppression » « Touche suppression » « Touche suppression » « Touche suppression ». Il n'est donc pas en mesure de lire le mot de passe. L'avantage est le même si une personne malveillante lit le mot de passe brouillé avant qu'il soit corrigé par l'utilisateur : la personne malveillante pense avoir le bon mot de passe mais il est erroné.

Ce mot de passe et ce brouillage sont bien entendus présentés à titre illustratif, le mot de passe et le brouillage choisis étant de préférence évidemment plus complexe, en particulier le mot de passe n'est généralement pas composé d'un mot du dictionnaire, est plus long, et le brouillage devrait être plus difficile à deviner car par exemple mélangé à des caractères complexes du mot de passe et les caractères ajoutés sont en nombre important.

L'invention ne se limite pas aux modes de réalisation décrits. En particulier, au-delà des systèmes de sécurité décrits ici, les mémoires des éléments du système et communications entre les différents éléments du système sont de préférence chiffrés et protégés par des principes de sécurités connus, notamment chiffrement AES, SSL, etc. de sorte à ajouter le maximum de sécurité à chaque élément et pour chaque transmission de données.

## Revendications

1. Système d'authentification à au moins un applicatif (12) accessible par un utilisateur via un ordinateur (14) et dont l'accès est contrôlé par une donnée d'authentification, comprenant :
- un dispositif (16) mobile principal, comprenant un module (20) de communication en champ proche, une mémoire (22) non volatile et une mémoire (24) volatile, et configuré pour communiquer avec l'ordinateur (14),
- un jeton (18) principal, comprenant un module (26) de communication en champ proche et une mémoire (28) non volatile dans laquelle est enregistrée au moins une donnée (30) d'authentification,
le dispositif (16) mobile principal étant configuré pour récupérer, via le module (22) de communication en champ proche, la donnée (30) d'authentification du jeton principal grâce à une clé (32) d'appairage, et le jeton (18) principal étant configuré pour permettre l'accès à la donnée (30) d'authentification uniquement sur présentation de ladite clé (32) d'appairage,
**caractérisé en ce que** la clé (32) d'appairage est segmentée en plusieurs segments, un premier segment (32a) étant enregistré sur la mémoire (22) non volatile du dispositif (16) mobile principal et au moins un autre segment (32b, 32c) supplémentaire étant enregistré sur une mémoire non volatile d'un dispositif (116) mobile secondaire et/ou une mémoire non volatile d'un jeton (118) secondaire, le dispositif (16) mobile principale étant configuré pour récupérer le ou les segments (32b, 32c) supplémentaires par communication en champ proche avec le ou lesdits dispositifs (116) mobiles secondaires et/ou le ou lesdits jetons (118) secondaires, pour reconstituer la clé (32) d'appairage et pour présenter la clé (32) d'appairage reconstituée au jeton (18) principal,
et **en ce que** le ou les segments (32b, 32c) supplémentaires récupérés par le dispositif (16) mobile principal sont stockés sur la mémoire (24) volatile du dispositif mobile principal.

2. Système d'authentification selon la revendication 1, **caractérisé en ce que** la donnée (30) d'authentification est une identité numérique, un mot de passe, un couple identifiant/mot de passe, une clé de chiffrement ou un code d'accès.

3. Système d'authentification selon la revendication 2, **caractérisé en ce que** la donnée (30) numérique est un mot de passe, **en ce que** le jeton (18) principal comprend un module de brouillage adapté pour brouiller ledit mot de passe par un ajout de caractères à des positions particulières du mot de passe, lesdits caractères et lesdites positions étant prédéterminées et connues de l'utilisateur.

4. Système d'authentification selon l'une des revendications 1 à 3, **caractérisé en ce que** la clé (32) d'appairage est segmentée en un premier segment (32a) et au moins deux segments (32b, 32c) supplémentaires, et **en ce que** les segments (32a, 32b) supplémentaires sont ordonnés, de sorte que la reconstitution de la clé (32) d'appairage n'est possible que si les segments (32b, 32c) supplémentaires sont récupérés par le dispositif (16) mobile principal dans un ordre prédéterminé.

5. Système d'authentification selon l'une des revendications 1 à 4, **caractérisé en ce que** le jeton (18) principal comprend une pluralité de données d'authentification chacune identifiées par un libellé, et **en ce que** le dispositif (16) mobile principal requiert une donnée d'authentification en fournissant ledit libellé au jeton (18) principal.

6. Procédé d'authentification mis en oeuvre par un système d'authentification selon l'une des revendications 1 à 5, **caractérisé en ce qu'**il comprend les étapes suivantes :
- une étape (42) de requête d'une donnée d'authentification par l'applicatif,
- une étape (44) de transmission de la requête de l'ordinateur vers le dispositif mobile principal,
- une étape (46) de communication en champ proche du dispositif mobile principal avec le jeton principal,
- une étape (48) de vérification de la clé d'appairage reconstituée présentée par le dispositif, et :
- tant que la clé d'appairage n'est pas complète, une étape (50) de récupération d'au moins un segment de clé d'appairage par le dispositif mobile principal, suivi d'une nouvelle étape de vérification de la clé d'appairage reconstituée,
- si la clé d'appairage est correcte, une étape (52) de transmission de la donnée d'authentification par le jeton principal au dispositif mobile principal,
- une étape (54) de stockage de la donnée d'authentification par le dispositif mobile principal dans sa mémoire volatile,
- une étape (56) de transmission de la donnée d'authentification par le dispositif mobile principal à l'ordinateur,
- une étape (58) d'authentification à l'applicatif via la donnée d'authentification.

7. Procédé d'authentification mis en oeuvre par un système d'authentification selon la revendication 6, **caractérisé en ce que** l'étape (58) d'authentification à l'applicatif comprend une sous-étape de copie du mot de passe brouillé dans un champ de texte de l'applicatif, et une sous-étape de suppression par l'utilisateur des caractères ajoutés par le module de brouillage, de sorte à ce que le mot de passe affiché corresponde au mot de passe de l'applicatif.

## Patentansprüche

1. Authentifizierungssystem an mindestens einer Anwendung (12), auf die ein Benutzer über einen Computer (14) zugreifen kann und deren Zugang durch eine Authentifizierungsangabe gesteuert wird, umfassend:
- eine mobile Hauptvorrichtung (16), die ein Nahfeldkommunikationsmodul (20), einen nichtflüchtigen Speicher (22) und einen flüchtigen Speicher (24) umfasst und konfiguriert ist, um mit dem Computer (14) zu kommunizieren,
- ein Haupt-Token (18), umfassend ein Nahfeldkommunikationsmodul (26) und einen nichtflüchtigen Speicher (28), in dem mindestens eine Authentifizierungsangabe (30) registriert ist,
wobei die mobile Hauptvorrichtung (16) konfiguriert ist, um die Authentifizierungsangabe (30) des Haupt-Tokens mithilfe eines Pairing-Schlüssels (32) über das Nahfeldkommunikationsmodul (22) abzurufen, und wobei das Haupt-Token (18) konfiguriert ist, um den Zugang zur Authentifizierungsangabe (30) ausschließlich nach Vorlage des Pairing-Schlüssels (32) zu erlauben,
**dadurch gekennzeichnet, dass** der Pairing-Schlüssel (32) in mehrere Segmente segmentiert ist, wobei ein erstes Segment (32a) im nichtflüchtigen Speicher (22) der mobilen Hauptvorrichtung (16) registriert ist und mindestens ein anderes zusätzliches Segment (32b, 32c) in einem nichtflüchtigen Speicher einer mobilen Nebenvorrichtung (116) und/oder einem nichtflüchtigen Speicher eines Neben-Tokens (118) registriert ist, wobei die mobile Hauptvorrichtung (16) konfiguriert ist, um das oder die zusätzlichen Segmente (32b, 32c) durch Nahfeldkommunikation mit der oder den mobilen Nebenvorrichtungen (116) und/oder dem oder den Neben-Token (118) abzurufen, um den Pairing-Schlüssel (32) wiederherzustellen und um dem Haupt-Token (18) den wiederhergestellten Pairing-Schlüssel (32) vorzulegen,
und dadurch, dass das oder die zusätzlichen Segmente (32b, 32c), die von der mobilen Hauptvorrichtung (16) abgerufen werden, im flüchtigen Speicher (24) der mobilen Hauptvorrichtung gespeichert sind.

2. Authentifizierungssystem nach Anspruch 1, **dadurch gekennzeichnet, dass** die Authentifizierungsangabe (30) eine numerische Identität, ein Passwort, ein Kennung-Passwort-Paar, ein Verschlüsselungsschlüssel oder ein Zugangscode ist.

3. Authentifizierungssystem nach Anspruch 2, **dadurch gekennzeichnet, dass** die numerische Angabe (30) ein Passwort ist, dadurch, dass das Haupt-Token (18) ein Verschleierungsmodul umfasst, das dazu angepasst ist, das Passwort durch einen Zusatz von Zeichen an bestimmten Positionen des Passworts zu verschleiern, wobei die Zeichen und die Positionen vorbestimmt sind und dem Benutzer bekannt sind.

4. Authentifizierungssystem nach einem der Ansprüche 1 bis 3, **dadurch gekennzeichnet, dass** der Pairing-Schlüssel (32) in ein erstes Segment (32a) und mindestens zwei zusätzliche Segmente (32b, 32c) segmentiert ist, und dadurch, dass die zusätzlichen Segmente (32a, 32b) geordnet sind, sodass die Wiederherstellung des Pairing-Schlüssels (32) nur dann möglich ist, wenn die zusätzlichen Segmente (32b, 32c) von der mobilen Hauptvorrichtung (16) in einer vorbestimmten Reihenfolge abgerufen werden.

5. Authentifizierungssystem nach einem der Ansprüche 1 bis 4, **dadurch gekennzeichnet, dass** das Haupt-Token (18) eine Vielzahl von Authentifizierungsangaben umfasst, die jeweils durch eine Beschriftung identifiziert sind, und dadurch, dass die mobile Hauptvorrichtung (16) eine Authentifizierungsangabe fordert, indem sie dem Haupt-Token (18) die Beschriftung bereitstellt.

6. Authentifizierungsverfahren, das von einem Authentifizierungssystem nach einem der Ansprüche 1 bis 5 eingesetzt wird, **dadurch gekennzeichnet, dass** es die folgenden Schritte umfasst:
- einen Schritt (42) der Anfrage einer Authentifizierungsangabe durch die Anwendung,
- einen Schritt (44) der Übertragung der Anfrage von dem Computer an die mobile Hauptvorrichtung,
- einen Schritt (46) der Nahfeldkommunikation der mobilen Hauptvorrichtung mit dem Haupt-Token,
- einen Schritt (48) der Überprüfung des von der Vorrichtung vorgelegten wiederhergestellten Pairing-Schlüssels, und:
- solange der Pairing-Schlüssel nicht vollständig ist, einen Schritt (50) des Abrufens mindestens eines Pairing-Schlüsselsegments durch die mobile Hauptvorrichtung, gefolgt von einem neuen Schritt der Überprüfung des wiederhergestellten Pairing-Schlüssels,
- wenn der Pairing-Schlüssel korrekt ist, einen Schritt (52) der Übertragung der Authentifizierungsangabe durch das Haupt-Token an die mobile Hauptvorrichtung,
- einen Schritt (54) der Speicherung der Authentifizierungsangabe durch die mobile Hauptvorrichtung in ihrem flüchtigen Speicher,
- einen Schritt (56) der Übertragung der Authentifizierungsangabe durch die mobile Hauptvorrichtung an den Computer,
- einen Schritt (58) der Authentifizierung an der Anwendung über die Authentifizierungsangabe.

7. Authentifizierungsverfahren, das von einem Authentifizierungssystem nach Anspruch 6 eingesetzt wird, **dadurch gekennzeichnet, dass** der Schritt (58) der Authentifizierung an der Anwendung einen Teilschritt der Kopie des verschleierten Passworts in ein Textfeld der Anwendung und einen Teilschritt der Löschung der von dem Verschleierungsmodul hinzugefügten Zeichen durch den Benutzer umfasst, sodass das angezeigte Passwort dem Passwort der Anwendung entspricht.

## Claims

1. An authentication system to at least one application (12) accessible by a user via a computer (14) and for which the access is controlled by an authentication data, comprising:
- a main mobile device (16), comprising a near-field communication module (20), a non-volatile memory (22) and a volatile memory (24), and configured to communicate with the computer (14),
- a main token (18), comprising a near-field communication module (26) and a non-volatile memory (28) in which at least one authentication data (30) is recorded, the main mobile device (16) being configured to recover, via the near-field communication module (22), the authentication data (30) of the main token using a pairing key (32), and the main token (18) being configured to allow access to the authentication data (30) only upon presentation of said pairing key (32),
**characterized in that** the pairing key (32) is segmented into a plurality of segments, a first segment (32a) being recorded on the non-volatile memory (22) of the main mobile device (16) and at least one other additional segment (32b, 32c) being recorded on a non-volatile memory of a secondary mobile device (116) and/or a non-volatile memory of a secondary token (118), the main mobile device (16) being configured to recover the additional segment(s) (32b, 32c) by near-field communication with said secondary mobile device(s) (116) and/or said secondary token(s) (118), to reconstitute the pairing key (32) and to present the reconstituted pairing key (32) to the main token (18), and **in that** the additional segment(s) (32b, 32c) recovered by the main mobile device (16) are stored on the volatile memory (24) of the main mobile device.

2. The authentication system according claim 1, **characterized in that** the authentication data (30) is a digital identity, a password, an identifier/password pair, an encryption key or an access code.

3. The authentication system according to claim 2, **characterized in that** the digital data (30) is a password, **in that** the main token (18) comprises a scrambling module adapted to scramble said password by adding characters to particular positions of the password, said characters and positions being predetermined and known to the user.

4. The authentication system according to one of claims 1 to 3, **characterized in that** the pairing key (32) is segmented into a first segment (32a) and at least two additional segments (32b, 32c), and **in that** the additional segments (32a, 32b) are ordered, so that the reconstitution of the pairing key (32) is only possible if the additional segments (32b, 32c) are recovered by the main mobile device (16) in a predetermined order.

5. The authentication system according to one of claims 1 to 4, **characterized in that** the main token (18) comprises a plurality of authentication data each identified by a label, and **in that** the main mobile device (16) requires an authentication data by providing said label to the main token (18).

6. An authentication method implemented by an authentication system according to one of claims 1 to 5, **characterized in that** it comprises the following steps:
- a step (42) of requesting an authentication data by the application
- a step (44) of transmitting the request from the computer to the main mobile device,
- a step (46) of communicating in near-field of the main mobile device with the main token,
- a step (48) of checking the reconstituted pairing key presented by the device, and:
- as long as the pairing key is not complete, a step (50) of recovering at least one pairing key segment by the main mobile device, followed by a new step of checking the reconstituted pairing key,
- if the pairing key is correct, a step (52) of transmitting the authentication data by the main token to the main mobile device,
- a step (54) of storing the authentication data by the main mobile device in its volatile memory,
- a step (56) of transmitting the authentication data from the main mobile device to the computer,
- a step (58) of authentication to the application via the authentication data.

7. An authentication method implemented by an authentication system according to claim 6, **characterized in that** the step (58) of authentication to the application includes a sub-step of copying the scrambled password into a text field of the application, and a sub-step of deleting by the user the characters added by the scrambling module, so that the displayed password matches the password of the application.
